(19) Europäisches Patentamt
European Patent Office
Office européen des brevets

(11) **EP 4 604 240 A1**

(12) **EUROPEAN PATENT APPLICATION**
published in accordance with Art. 153(4) EPC

(43) Date of publication:
**20.08.2025 Bulletin 2025/34**

(21) Application number: **24843448.2**

(22) Date of filing: **12.07.2024**

(51) International Patent Classification (IPC):
$H01M\ 10/052$ (2010.01)   $H01M\ 4/131$ (2010.01)
$H01M\ 4/134$ (2010.01)   $H01M\ 4/525$ (2010.01)
$H01M\ 4/38$ (2006.01)   $H01M\ 4/48$ (2010.01)
$H01M\ 4/62$ (2006.01)   $H01M\ 4/02$ (2006.01)
$H01M\ 10/42$ (2006.01)

(52) Cooperative Patent Classification (CPC):
Y02E 60/10

(86) International application number:
**PCT/KR2024/010057**

(87) International publication number:
**WO 2025/018731 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023  KR 20230091706**

(71) Applicant: **LG Energy Solution, Ltd.
Seoul 07335 (KR)**

(72) Inventors:
• **KIM, Do Hyeong
  Daejeon 34122 (KR)**
• **KANG, Hyo Seok
  Daejeon 34122 (KR)**
• **JANG, Seol Heui
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **LITHIUM SECONDARY BATTERY**

(57)    The present invention is to provide a lithium secondary battery including a positive electrode; a negative electrode; and an electrolyte, wherein an average resistance X1 of the positive electrode at room temperature and SOC 20 to 100% and an average resistance Y1 of the negative electrode at room temperature and SOC 20 to 100% satisfy Expression (1) below, and an average resistance X2 of the positive electrode at room temperature and SOC 0 to 20% and an average resistance Y2 of the negative electrode at room temperature and SOC 0 to 20% satisfy Expression (2) below.

$$\text{Expression (1): } 0.6 \times Y1 \leq X1 \leq 0.9 \times Y1$$

$$\text{Expression (2): } 2 \times Y2 \leq X2$$

FIG. 1

**Description**

## TECHNICAL FIELD

The present invention relates to a lithium secondary battery.

## BACKGROUND ART

[Cross-reference to Related Applications]

This application claims priority from Korean Patent Application No. 10-2023-0091706, filed on July 14, 2023, the disclosure of which is incorporated by reference herein.

[Technical Field]

With technological development of electric vehicles, mobile electronic devices, etc., demand for a lithium secondary battery as a source of energy is rapidly increasing. Among these, according to recent technological development of electric vehicles, a battery with high energy density and high output is being required.

A lithium secondary battery with high energy density, for example, a lithium secondary battery for electric vehicles and for power storage, may be easily exposed to a high-temperature environment in the outside, and the temperature of the battery may rise due to instantaneous charging and discharging, and in such high-temperature environment, the battery lifetime may be reduced, and the amount of energy stored may be decreased.

Therefore, development of a high-capacity battery system capable of improving lifetime characteristics at high temperature, as well as at room temperature, is required.

Various factors may affect the lifetime characteristics of the lithium secondary battery, but among many others, it is necessary to design a positive electrode and a negative electrode in a balanced way. Even though a secondary battery is prepared by selecting a generally-known positive electrode material and negative electrode material with good performance, the problem of deteriorating lifetime characteristics may occur without thermodynamic or electrochemical balances between the positive electrode and the negative electrode.

## DISCLOSURE OF THE INVENTION

### TECHNICAL PROBLEM

The inventors of the present invention seek to achieve thermodynamic or electrochemical balances between a positive electrode and a negative electrode, thereby preventing rapid deterioration in room-temperature and high-temperature lifetime characteristics of a lithium secondary battery including them.

### TECHNICAL SOLUTION

[1] The present invention provides a lithium secondary battery including a positive electrode; a negative electrode; and an electrolyte, wherein an average resistance X1 of the positive electrode at room temperature and SOC 20 to 100% and an average resistance Y1 of the negative electrode at room temperature and SOC 20 to 100% satisfy Expression (1) below, and an average resistance X2 of the positive electrode at room temperature and SOC 0 to 20% and an average resistance Y2 of the negative electrode at room temperature and SOC 0 to 20% satisfy Expression (2) below.

$$\text{Expression (1): } 0.6 \times Y1 \leq X1 \leq 0.9 \times Y1$$

$$\text{Expression (2): } 2 \times Y2 \leq X2$$

[2] The present invention may provide the lithium secondary battery of [1] above, wherein an average resistance X3 of the positive electrode at 40 °C and SOC 20 to 100% and an average resistance Y3 of the negative electrode at 40 °C and SOC 20 to 100% further satisfy Expression (3) below.

$$\text{Expression (3):} \quad 0.75 \times Y3 \leq X3 \leq Y3$$

[3] The present invention may provide the lithium secondary battery of [1] or [2] above, wherein an average resistance X4 of the positive electrode at 40 °C and SOC 0 to 20% and an average resistance Y4 of the negative electrode at 40 °C and SOC 0 to 20% further satisfy Expression (4) below.

$$\text{Expression (4):} \quad 1.5 \times Y4 \leq X4$$

[4] The present invention may provide the lithium secondary battery of any one of [1] to [3] above, wherein the positive electrode includes a positive electrode active material layer and a positive electrode current collector, the positive electrode active material layer includes a positive electrode active material, a conductive material, and a binder, and the positive electrode active material is a lithium nickel-based transition metal oxide containing a nickel content of 85 atm% or greater in transition metal other than lithium.

[5] The present invention may provide the lithium secondary battery of [4] above, wherein the positive electrode active material is a single particle or a similar-single particle.

[6] The present invention may provide the lithium secondary battery of [4] or [5] above, wherein the conductive material is included in an amount of 0.1 to 2.5 wt% on the basis of the entire positive electrode active material layer.

[7] The present invention may provide the lithium secondary battery of any one of [4] to [6] above, wherein the positive electrode active material has a powder resistance of 100 to 500 $\Omega$.

[8] The present invention may provide the lithium secondary battery of any one of [1] to [7] above, wherein the negative electrode includes a negative electrode active material layer and a negative electrode current collector, the negative electrode active material layer includes a negative electrode active material, a conductive material, and a binder, and the negative electrode active material includes a silicon-based negative electrode active material.

[9] The present invention may provide the lithium secondary battery of [8] above, wherein the silicon-based negative electrode active material is selected from the group consisting of SiO, SiC, and Si.

[10] The present invention may provide the lithium secondary battery of [8] or [9] above, wherein the silicon-based negative electrode active material is included in an amount of 3 wt% or greater on the basis of the entire negative electrode active material layer.

[11] The present invention may provide the lithium secondary battery of any one of [8] to [10] above, wherein the conductive material is included in an amount of 0.05 to 2.50 wt% on the basis of the entire negative electrode active material layer.

## ADVANTAGEOUS EFFECTS

In operation of a lithium secondary battery, the present inventor found out that, when deteriorations in both of a positive electrode and a negative electrode are in progress, controlling the level of deterioration of the negative electrode relative to that of the positive electrode at a particular temperature and in a particular charging section may help the lithium secondary battery operating stably.

When the lithium secondary battery operates, deterioration occurs both in the positive electrode and the negative electrode, and by controlling the levels of deterioration in the positive electrode and the negative electrode according to the charging/discharging region, the lithium secondary battery may have excellent long-life characteristics. In particular, by adjusting resistance of the positive/negative electrodes in room-temperature and high-temperature environments to suppress use of the negative electrode, and inducing the positive electrode to deteriorate relatively further, the effect of excellent long-life characteristics may be achieved.

## BRIEF DESCRIPTION OF THE DRAWINGS

FIG. 1 shows results of measuring resistance values according to SOC at 24 °C, of a positive electrode and a negative electrode of a lithium secondary battery according to Example 1.

FIG. 2 shows results of measuring resistance values according to SOC at 40 °C of a positive electrode and a negative electrode of a lithium secondary battery according to Example 1.

FIG. 3 shows results of measuring resistance values according to SOC at 24 °C of a positive electrode and a negative electrode of a lithium secondary battery according to Example 2.

FIG. 4 shows results of measuring resistance values according to SOC at 40 °C of a positive electrode and a negative electrode of a lithium secondary battery according to Example 2.

FIG. 5 shows results of measuring resistance values according to SOC at 24 °C of a positive electrode and a negative electrode of a lithium secondary battery according to Example 3.

FIG. 6 shows results of measuring resistance values according to SOC at 40 °C of a positive electrode and a negative electrode of a lithium secondary battery according to Example 3.

FIG. 7 shows results of measuring resistance values according to SOC at 24 °C of a positive electrode and a negative electrode of a lithium secondary battery according to Comparative Example 1.

FIG. 8 shows results of measuring resistance values according to SOC at 40 °C of a positive electrode and a negative electrode of a lithium secondary battery according to Comparative Example 1.

FIG. 9 shows results of measuring resistance values according to SOC at 24 °C of a positive electrode and a negative electrode of a lithium secondary battery according to Comparative Example 2.

FIG. 10 shows results of measuring resistance values according to SOC at 40 °C of a positive electrode and a negative electrode of a lithium secondary battery according to Comparative Example 2.

FIG. 11 shows results of measuring resistance values according to SOC at 24 °C of a positive electrode and a negative electrode of a lithium secondary battery according to Comparative Example 3.

FIG. 12 shows results of measuring resistance values according to SOC at 40 °C of a positive electrode and a negative electrode of a lithium secondary battery according to Comparative Example 3.

FIG. 13 shows results of measuring resistance values according to SOC at 24 °C of a positive electrode and a negative electrode of a lithium secondary battery according to Comparative Example 4.

FIG. 14 shows results of measuring resistance values according to SOC at 40 °C of a positive electrode and a negative electrode of a lithium secondary battery according to Comparative Example 4.

## MODE FOR CARRYING OUT THE INVENTION

Hereinafter, the present invention will be described in more detail.

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

In the present invention, a "primary particle" refers to a particle unit in which a grain boundary is not present in appearance when observed at 5000 times to 20000 times magnification using a scanning electron microscope. An "average particle diameter of primary particles" refers to an arithmetic mean value calculated from the values obtained by measuring particle diameters of primary particles observed from a scanning electron microscope image.

In the present invention, a "secondary particle" refers to a particle formed by aggregation of a plurality of primary particles. In the present invention, a secondary particle in which 10 or less of primary particles are aggregated will be referred to as a similar-single particle in order to distinguish it from a conventional secondary particle which is formed by aggregation of tens to hundreds of primary particles.

In the present invention, the "average particle diameter $D_{50}$" refers to a particle size at 50% in a cumulative volume particle size distribution of a positive electrode active material powder, which may be measured by using a laser diffraction method. For example, after the positive electrode active material powder is dispersed in a dispersion medium, the dispersion medium is introduced into a commercial laser diffraction particle size measurement instrument (e.g., Microtrac MT 3000) and irradiated with ultrasonic waves of about 28 kHz at an output of 60 W, and then a cumulative-volume particle size distribution graph is obtained, and the particle size corresponding to 50% of the cumulative volume may then be calculated therefrom to measure $D_{50}$.

A lithium secondary battery according to the present invention includes a positive electrode; a negative electrode; and an electrolyte, an average resistance X1 of the positive electrode at room temperature and SOC 20 to 100% and an average resistance Y1 of the negative electrode at room temperature and SOC 20 to 100% satisfy Expression (1) below, and an average resistance X2 of the positive electrode at room temperature and SOC 0 to 20% and an average resistance Y2 of the negative electrode at room temperature and SOC 20 to 100% satisfy Expression (2) below.

$$\text{Expression (1): } 0.6 \times Y1 \leq X1 \leq 0.9 \times Y1$$

$$\text{Expression (2): } 2 \times Y2 \leq X2$$

The room temperature refers to a constant temperature without heating or cooling, and may be in a range of about 15 to 25 °C.

**EP 4 604 240 A1**

Charging and discharging of the lithium secondary battery occurs as lithium ions move between the positive/negative electrodes. When the charging/discharging is in progress, deterioration of the lithium secondary battery occurs due to side reactions with an electrolyte solution and structural collapse in the positive electrode and the negative electrode. At this time, it is most ideal if the positive electrode and the negative electrode deteriorate to a similar level. The positive electrode has the property of deteriorating quickly at a high voltage, and the negative electrode, if containing a silicon-based active material, has the property of having increasing reactions of the silicon-based active material in a lower section of discharging (SOC 0 to 20%). In the lithium secondary battery of the present invention, by making the resistance of the positive electrode slightly lower than that of the negative electrode at SOC 20 to 100% where a high voltage is applied, deterioration of the positive electrode may be suppressed. In addition, in the lithium secondary battery of the present invention, the resistance of the positive electrode may be adjusted to be high at SOC 0 to 20% that is the lower section of discharging to prevent a potential of the negative electrode from rising in discharging, thereby suppressing deterioration of the negative electrode active material. Accordingly, by minimizing the difference in level of deterioration between the positive electrode and the negative electrode, lifetime characteristics of the lithium secondary battery may be maximized.

The average resistance of the positive electrode and the average resistance of the negative electrode may be measured respectively by using a first coin cell prepared with the positive electrode and a lithium metal counter electrode and by using a second coin cell prepared with the negative electrode and a lithium metal counter electrode. In particular, the first coin cell and the second coin cell may be prepared by disassembling the positive electrode and the negative electrode from the prepared lithium secondary battery and connecting lithium metal in the thickness of 200 $\mu$m to the counter electrodes, and injecting an electrolyte containing $LiPF_6$ lithium salt and an organic solvent (a mixed solvent of ethylene carbonate, dimethyl carbonate, and ethylmethyl carbonate) thereto then aging for 24 hours.

In Expression (1) above, X1 is an average resistance of the positive electrode at room temperature and SOC 20 to 100%, which refers to an average resistance value ($\Omega$) of the first coin cell in a SOC 20 to 100% region when discharged with 1 C at room temperature. In particular, X1 is the average resistance value for the SOC 20 to 100% region calculated from the resistance values measured according to the state of charge (SOC) while fully charging the first coin cell and discharging it with 1C, using a hybrid pulse power characterization (HPPC) test at room temperature.

In Expression (1) above, Y1 is an average resistance of the negative electrode at room temperature and SOC 20 to 100%, which may be obtained by measuring an average resistance value ($\Omega$) of the second coin cell in a SOC 20 to 100% region when discharged with 1 C at room temperature. In particular, Y1 is the average resistance value for the SOC 20 to 100% region calculated from the resistance values measured according to the state of charge (SOC) while fully charging the second coin cell and discharging it with 1C, using a hybrid pulse power characterization (HPPC) test at room temperature.

At SOC 20-100%, since high potential is applied, structural collapse and side reactions with the electrolyte solution in the positive electrode are maximized. Consequently, deterioration of the positive electrode progresses rapidly, thereby decreasing a capacity retention rate of the lithium secondary battery. In the lithium secondary battery of the present invention satisfying Expression (1) above at room temperature, the positive electrode resistance and the negative electrode resistance may be adjusted to a similar level in a SOC 20 to 100% region to prevent significant occurrence of overvoltage of the positive electrode in charging, and to prevent significant rise of potential of the positive electrode in charging with constant current (CC), thereby reducing the structural collapse and side reactions with the electrolyte solution in the positive electrode material.

In Expression (2) above, X2 is an average resistance of the positive electrode at room temperature and SOC 0 to 20%, which may be obtained by measuring an average resistance value ($\Omega$) of the first coin cell in a SOC 0 to 20% region when discharged with 1 C at room temperature. In particular, X2 is the average resistance value for the SOC 0 to 20% region calculated from the resistance values measured according to the state of charge (SOC) while fully charging the first coin cell and discharging it with 1C, using a hybrid pulse power characterization (HPPC) test at room temperature.

In Expression (2) above, Y2 is an average resistance of the negative electrode at room temperature and SOC 0 to 20%, which may be obtained by measuring an average resistance value ($\Omega$) of the second coin cell in a SOC 0 to 20% region when discharged with 1 C at room temperature. In particular, Y2 is the average resistance value for the SOC 0 to 20% region calculated from the resistance values measured according to the state of charge (SOC) while fully charging the second coin cell and discharging it with 1C, using a hybrid pulse power characterization (HPPC) test at room temperature.

The silicon-based negative electrode active material is highly activated at SOC 0 to 20%. If the potential of the negative electrode rises significantly in the SOC 0 to 20% region in the discharging of the lithium secondary battery, usage of the silicon-based negative electrode active material is increased, causing pulverization and side reactions with an electrolyte solution to be maximized, thereby deteriorating performance of the lithium secondary battery. In the lithium secondary battery of the present invention satisfying Expression (2) above at room temperature, by setting the resistance of the positive electrode higher than that of the negative electrode, the potential of the positive electrode may fall before the potential of the negative electrode rises in the discharging of the lithium secondary battery, so that the operation of the lithium secondary battery may be terminated quickly. Accordingly, the potential of the negative electrode in the SOC 0 to 20% region is no longer high in discharging, so that the usage of the silicon-based negative electrode active material is reduced, and accordingly, deterioration of the negative electrode is suppressed, which may result in excellent lifetime characteristics.

The lithium secondary battery according to the present invention may satisfy, more preferably, Expression (2-1) below.

$$\text{Expression (2-1): } 2 \times Y2 \leq X2 \leq 6.5 \times Y2$$

In Expression (2-1) above, definitions of X2 and Y2 are the same as those in Expression (2).

In addition, the lithium secondary battery according to the present invention may satisfy Expression (A) below.

Expression (A): $0.9 \times Y1 + Y2 \leq 1.5 \times (X1 + 0.5 \times X2)$

In Expression (A) above, definitions of X1, X2, Y1, and Y2 are the same as those in Expressions (1) and (2).

In the lithium secondary battery according to the present invention, an average resistance X3 of the positive electrode at 40 °C and SOC 20 to 100% and an average resistance Y3 of the negative electrode at 40 °C and SOC 20 to 100% may satisfy the condition of Expression (3) below.

$$\text{Expression (3): } 0.75 \times Y3 \leq X3 \leq Y3$$

In Expression (3) above, X3 is an average resistance of the positive electrode at 40 °C and SOC 20 to 100%, which may be obtained by measuring an average resistance value (Ω) of the first coin cell in a SOC 20 to 100% region when discharged with 1 C at 40 °C. In particular, X3 is the average resistance value for the SOC 20 to 100% region calculated from the resistance values measured according to the state of charge (SOC) while fully charging the first coin-cell and discharging it with 1 C, using a hybrid pulse power characterization (HPPC) test at 40 °C.

In Expression (3) above, Y3 is an average resistance of the negative electrode at 40 °C and SOC 20 to 100%, which may be obtained by measuring an average resistance value (Ω) of the second coin cell in a SOC 20 to 100% region when discharged with 1 C at 40 °C. Y3 is the average resistance value for the SOC 20 to 100% region calculated from the resistance values measured according to the state of charge (SOC) while fully charging the second coin cell and discharging it with 1 C, using a hybrid pulse power characterization (HPPC) test at 40 °C.

As the lithium secondary battery of the present invention satisfies Expression (3) above at 40 °C, when the positive electrode resistance and the negative electrode resistance in the SOC 20 to 100% region are adjusted to a similar level at 40 °C more than at the room temperature, deterioration of the positive electrode and the negative electrode may be adjusted to a similar level.

In the lithium secondary battery according to the present invention, an average resistance X4 of the positive electrode at 40 °C and SOC 0 to 20% and an average resistance Y4 of the negative electrode at 40 °C and SOC 0 to 20% may satisfy the condition of Expression (4) below.

$$\text{Expression (4): } 1.5 \times Y4 \leq X4$$

In Expression (4) above, X4 is an average resistance of the positive electrode at 40 °C and SOC 0 to 20%, which may be obtained by measuring an average resistance value (Ω) of the first coin cell in a SOC 0 to 20% region when discharged with 1 C at 40 °C. In particular, X4 is the average resistance value for the SOC 0 to 20% region calculated from the resistance values measured according to the state of charge (SOC) while fully charging the first coin cell and discharging it with 1 C, using a hybrid pulse power characterization (HPPC) test at 40 °C.

In Expression (4) above, Y4 is an average resistance of the negative electrode at 40 °C and SOC 0 to 20%, which may be obtained by measuring an average resistance value (Ω) of the second coin cell in a SOC 0 to 20% region when discharged with 1 C at 40 °C. In particular, Y4 is the average resistance value for the SOC 0 to 20% region calculated from the resistance values measured according to the state of charge (SOC) while fully charging the second coin cell and discharging it with 1 C, using a hybrid pulse power characterization (HPPC) test at 40 °C.

The silicon-based negative electrode active material is highly activated at SOC 0 to 20%. If the potential of the negative electrode rises significantly in the SOC 0-20% region in discharging of the lithium secondary battery, usage of the silicon-based negative electrode active material is increased, causing pulverization and side reactions with an electrolyte solution to be maximized, thereby deteriorating performance of the lithium secondary battery. By setting the resistance of the positive electrode higher than that of the negative electrode, the potential of the positive electrode may fall before the potential of the negative electrode rises in discharging, so that the operation of the lithium secondary battery may be terminated quickly. Accordingly, since the potential of the negative electrode in the SOC 0 to 20% region is no longer high in the discharging, usage of the silicon-based negative electrode active material is reduced, and thus deterioration of the negative electrode is suppressed, which may result in excellent lifetime characteristics. In the 40 °C condition of Expression (4), difference in resistance between the negative electrode and the positive electrode is smaller than in the room-temperature condition of Expression (2), which suggests that the positive electrode resistance may be slightly lowered as the positive electrode deteriorates faster at high temperature.

The lithium secondary battery according to the present invention may satisfy, more preferably, Expression (4-1) below.

$$\text{Expression (4-1): } 1.5 \times Y4 \leq X4 \leq 6.5 \times Y4$$

In Expression (4-1) above, definitions of X4 and Y4 are the same as those in Expression (4).

The lithium secondary battery according to the present invention may satisfy Expression (B) below.

$$\text{Expression (B): } Y3 + 1.5 \times Y4 \leq X3 + X4$$

In Expression (B) above, definitions of X3, X4, Y3, and Y4 are the same as those in Expressions (3) and (4).

The positive electrode of the present invention may have a structure in which a positive electrode active material layer is formed on one side or both sides of a positive electrode current collector, and the positive electrode active material layer may include a positive electrode active material, a conductive material, and a binder.

As the positive electrode current collector, various positive electrode current collectors that are used in the art may be used. For example, as the positive electrode current collector, stainless steel, aluminum, nickel, titanium, calcined carbon, aluminum or stainless steel that is surface-treated with carbon, nickel, titanium, silver, etc., or the like may be used. The positive electrode current collector may generally have a thickness of 3 to 500 $\mu$m, and microscopic irregularities may be formed on a surface of the positive electrode current collector to improve adhesion of the positive electrode active material. The positive electrode current collector may be used in various forms, for example, a film, a sheet, a foil, a net, a porous body, a foam body, a non-woven fabric body, etc.

Meanwhile, as the positive electrode active material, positive electrode active materials generally used in the art may be used.

Preferably, the positive electrode active material may include a lithium nickel-based oxide, and in particular, may include a lithium nickel-based transition metal oxide including a nickel content of 85 atm% or greater or 90 atm% or greater in transition metal other than lithium. Preferably, the lithium nickel-based oxide may include Ni of 90 mol% or greater and less than 100 mol%, 93 mol% or greater and less than 100 mol%, or 95 mol% or greater and less than 100 mol%. When the lithium nickel-based oxide with high Ni content, as described above, is used, high capacity may be achieved.

More particularly, the positive electrode active material may include a lithium nickel-based oxide represented by [Chemical Formula 5] below.

[Chemical Formula 5] $\quad\quad Li_aNi_bCo_cM^1_dM^2_eO_2$

In Chemical Formula 5 above, $M^1$ may be Mn, Al, or a combination thereof, and preferably, Mn, or Mn and Al.

$M^2$ above may be one or more selected from the group consisting of Zr, W, Y, Ba, Ca, Ti, Mg, Ta, and Nb, preferably, one or more selected from the group consisting of Zr, Y, Mg, and Ti, and more preferably, Zr, Y, or a combination thereof. A $M^2$ element is not necessarily included, but if included in an appropriate amount, it may serve to promote particle growth during calcination, or improve crystal-structure stability.

a above refers to a molar ratio of lithium in the lithium nickel-based oxide, where $0.8 \leq a \leq 1.2$, $0.85 \leq a \leq 1.15$, or $0.9 \leq a \leq 1.2$ may be satisfied. When the molar ratio of lithium falls within the above ranges, the crystal structure of the lithium nickel-based oxide may be stably formed.

b above refers to a molar ratio of nickel among the total metal other than lithium in the lithium nickel-based oxide, where $0.85 \leq b < 1$, $0.9 \leq b < 1$, or $0.95 \leq b < 0.98$ may be satisfied. When the molar ratio of nickel falls within the above ranges, high energy density may be achieved, and thus, it is possible to achieve high capacity.

c above refers to a molar ratio of cobalt among the total metal other than lithium in the lithium nickel-based oxide, where $0 < c < 0.15$, $0 < c < 0.1$, or $0.02 \leq c \leq 0.07$ may be satisfied. When the molar ratio of cobalt falls within the above ranges, good resistance characteristics and output characteristics may be achieved.

d above refers to a molar ratio of a $M^1$ element among the total metal other than lithium in the lithium nickel-based oxide, where $0 < d < 0.15$, $0 < d < 0.1$, or $0.01 \leq d \leq 0.05$ may be satisfied. When the molar ratio of the $M^1$ element falls within the above ranges, the structural stability of the positive electrode active material is excellent.

e above refers to a molar ratio of a $M^2$ element among the total metal other than lithium in the lithium nickel-based oxide, where $0 \leq e \leq 0.1$ or $0 \leq e \leq 0.01$ may be satisfied.

Meanwhile, the positive electrode active material according to the present invention may further include a coating layer, as needed, containing one or more coating elements selected from the group consisting of Al, Ti, W, B, F, P, Mg, Ni, Co, Fe, Cr, V, Cu, Ca, Zn, Zr, Nb, Mo, Sr, Sb, Bi, Si, and S on a particle surface of the lithium nickel-based oxide. Preferably, the coating element may be Al, B, Co, or a combination thereof, and most preferably, the coating element may be B.

In a case where the coating layer exists on the particle surface of the lithium nickel-based oxide, contacts of an electrolyte with a lithium composite transition-metal oxide may be suppressed by the coating layer, and accordingly, effect of reducing the elution of transition metal or gas generation, caused by side reactions with an electrolyte, may be achieved.

Meanwhile, the positive electrode active material may have a form not particularly limited, including a secondary particle form in which a plurality of primary particles is aggregated, a single particle form composed of one primary particle, or a form of a combination thereof.

Preferably, the positive electrode active material may include a positive electrode active material formed of a single particle composed of one primary particle and/or formed of a similar-single particle which is an aggregate of 10 or less primary particles. By using a positive electrode active material formed of a single particle composed of one primary particle and/or formed of a similar-single particle which is an aggregate of 10 or less primary particles as the positive electrode active material, a lithium secondary battery having excellent stability, as well as providing high capacity, may be achieved.

Since the positive electrode active material in a single particle form composed of one primary particle, or in a similar-single particle form in which 10 or less primary particles are aggregated has higher particle strength than a positive electrode active material in a typical secondary particle form in which tens to hundreds of primary particles are aggregated, particle fracture hardly occurs in rolling. In addition, in case of the positive electrode active material in a single particle or similar-single particle form, the number of primary particles constituting the particle is small, so that changes due to volume expansion or contraction of the primary particles occur less in charging and discharging, and accordingly, occurrence of cracks inside the particle is significantly reduced.

Therefore, if the content of Ni in the positive electrode material is increased for achieving the high energy, there is a problem of increasing structural instability in the positive electrode, but in case of using the positive electrode active material in a single particle and/or similar-single particle form, the amount of gas generation, caused by the particle fracture and internal crack occurrence, may be significantly reduced, and excellent stability may be achieved. However, in case of using the positive electrode active material in a single particle form having high nickel content, there is a limitation that the resistance is high, so that resistance characteristics of the positive electrode and the negative electrode of the lithium secondary battery need to be adjusted to satisfy the conditions of Expression (1) and Expression (2) above.

In particular, the positive electrode active material may have a powder resistance of 100 to 500 $\Omega$, preferably 200 to 400 $\Omega$, and more preferably 300 to 350 $\Omega$. When the powder resistance falls within the above ranges, the level of deterioration may be adjusted to a similar level as the negative electrode.

Meanwhile, the positive electrode active material in a single particle and/or similar-single particle form, according to the present invention, may have an average particle diameter $D_{50}$ of 5 $\mu$m or less, 4 $\mu$m or less, 3 $\mu$m or less, or 2 $\mu$m or less, and for example, 0.5 $\mu$m to 5 $\mu$m, preferably 1 $\mu$m to 5 $\mu$m, and more preferably 2 $\mu$m to 5 $\mu$m. The average particle diameter $D_{50}$ of the positive electrode active material falls within the above ranges, increase in resistance may be minimized.

Since the positive electrode active material in a single particle and/or similar-single particle form has a small grain boundary, between the primary particles, that serves as a path through which lithium ions are dispersed inside the particle, there is a problem that the lithium mobility is lower than that of a positive electrode active material in a secondary particle form, causing the increase of resistance. This increase of resistance is intensified as the size of the particle is larger, and the increased resistance adversely affects the capacity and output characteristics. Therefore, in the present invention, by applying the positive electrode active material in a single particle or similar-single particle form having a small average particle diameter $D_{50}$ that is 5 $\mu$m or less, the distance to which the lithium ions are dispersed inside the particle was minimized, thereby suppressing the increase of resistance.

An average particle diameter of the primary particles in the positive electrode active material in a single particle and/or similar-single particle form may be 5 $\mu$m or less, 4 $\mu$m or less, 3 $\mu$m or less, or 2 $\mu$m or less, and for example, 0.5 $\mu$m to 5 $\mu$m, preferably 1 $\mu$m to 5 $\mu$m, and more preferably 2 $\mu$m to 5 $\mu$m. When the average particle diameter of the primary particle falls within the above ranges, a positive electrode active material in a single particle and/or similar-single particle form having excellent electrochemical characteristics may be formed. If the average particle diameter of the primary particle is too small, since the number of primary particles aggregated to form a positive electrode active material becomes large, effect of suppressing the occurrence of particle fracture in rolling may be reduced, and if the average particle diameter of the primary particle is too large, since the path of lithium dispersion inside the primary particle becomes long, the resistance may increase, and the output characteristics may be reduced.

In the present invention, it is preferable for the positive electrode active material in a single particle and/or similar-single particle form to have a unimodal particle-size distribution. Conventionally, in order to improve electrode density of a positive electrode active material layer, a bimodal positive electrode active material, in which a large particle-diameter positive electrode active material having a large average particle diameter and a small particle-diameter positive electrode active material having a small average particle diameter are mixed, has often been used. However, in case of the positive electrode active material in a single particle or similar-single particle form, as the particle diameter increases, the movement path of lithium becomes longer, thereby increasing the resistance significantly, and thus, if the large particle-diameter particle is used together, the problem of reducing the capacity and output characteristics may be caused. Therefore, in the present invention, by using the positive electrode active material having a unimodal distribution, the increase of resistance may be minimized.

Next, the conductive material is used to provide conductivity to the electrode, and any material may be used in the battery, without particular limitation, as long as it does not cause chemical changes and conducts electrons. Specific examples may be graphite such as natural graphite or artificial graphite; a carbon-based material including carbon black, acetylene black, ketjen black, channel black, furnace black, lamp black, thermal black, a carbon fiber, carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used.

The conductive material may be included in the amount of 0.1 to 2.5 wt%, preferably 0.5 to 2.0 wt%, and more preferably 1.0 to 1.8 wt% on the basis of the total weight of the positive electrode active material layer.

The binder serves to improve binding between the positive electrode active material particles and adhesion between the positive electrode active material and the positive electrode current collector, and specific examples may include polyvinylidene fluoride (PVDF), vinylidene fluoride-hexafluoropropylene copolymer (PVDF-co-HFP), polyvinylalcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), fluorine rubber, or various copolymers thereof, and any one alone or a mixture of two or more thereof may be used.

The binder may be included in the amount of 1 to 30 wt%, preferably 1 to 10 wt%, and more preferably 1.5 to 5.0 wt% on the basis of the total weight of the positive electrode active material layer.

The negative electrode of the present invention may have a structure in which a negative electrode active material layer is formed on one side or both sides of a negative electrode current collector, and the negative electrode active material layer may include a negative electrode active material, a conductive material, and a binder.

As the negative electrode current collector, negative electrode current collectors generally used in the art may be used, and for example, copper, stainless steel, aluminum, nickel, titanium, calcined carbon, copper or stainless steel that is surface-treated with carbon, nickel, titanium, silver, etc., an aluminum-cadmium alloy, etc. may be used. The negative electrode current collector may generally have a thickness of 3 to 500 $\mu$m, and like the positive electrode current collector, microscopic irregularities may be formed on a surface of the current collector to strengthen binding force of the negative electrode active material. For example, the negative electrode current collector may be used in various forms including a film, a sheet, a foil, a net, a porous body, a foam body, a non-woven fiber body, etc.

The negative electrode active material may include a silicon-based negative electrode active material such as Si, Si-Me alloy (where, Me is one or more selected from the group consisting of Al, Sn, Mg, Cu, Fe, Pb, Zn, Mn, Cr, Ti, and Ni.), SiOy (where, 0<y<2), and a Si-C composite, and most preferably, may include a silicon-based negative electrode active material selected from the group consisting of SiO, SiC, and Si. The negative electrode including the silicon-based negative electrode active material may have high capacity. However, in a case where a positive electrode with high resistance is used together with the negative electrode including the silicon-based negative electrode active material, there is a limitation that, due to increased usage of the negative electrode including the silicon-based negative electrode active material at room temperature, the negative electrode deteriorates rapidly causing rapid deterioration of performance of a lithium secondary battery, and therefore, resistance characteristics of the positive electrode and the negative electrode of the lithium secondary battery need to be adjusted to satisfy the conditions of Expression (1) and Expression (2) above.

As the negative electrode active material other than the silicon-based negative electrode active material, a compound capable of reversible intercalation and deintercalation of lithium may be used. Specific examples may include a carbon-based material including artificial graphite, natural graphite, a graphitized carbon fiber, amorphous carbon, etc.; a lithium metal thin film; a metal material capable of alloying with lithium including Sn, Al, etc.; and the like, and any one or a mixture of two or more thereof may be used.

The silicon-based negative electrode active material may be included in the amount of 3 wt% or greater, preferably 3 to 10 wt%, and more preferably 3 to 6 wt% on the basis of the entire negative electrode active material layer.

The conductive material is used to provide conductivity to the negative electrode, and any material may be used in the battery, without particular limitation, as long as it does not cause chemical change and conducts electrons. Specific examples may include graphite such as natural graphite or artificial graphite; a carbon-based material including carbon black, acetylene black, ketjen black, channel black, furnace black, lamp black, thermal black, a carbon fiber, carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used.

The conductive material may be included generally in the amount of 0.05 to 2.50 wt%, preferably 0.5 to 2.0 wt%, and more preferably 1.0 to 1.5 wt% on the basis of the total weight of the negative electrode active material layer.

The binder serves to improve binding between the negative electrode active material particles and adhesion between the negative electrode active material and the negative electrode current collector. Specific examples may include polyvinylidene fluoride (PVDF), vinylidene fluoride-hexafluoropropylene copolymer (PVDF-co-HFP), polyvinylalcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), fluorine rubber, or various copolymers thereof, and any one alone or a mixture of two or more thereof may be used.

The binder may be included in the amount of 1 to 10 wt%, preferably 1 to 5 wt%, and more preferably 1.5 to 3.0 wt% on the basis of the total weight of the negative electrode active material layer.

In addition to the positive electrode and the negative electrode, a separator introduced between the positive electrode and the negative electrode separates the negative electrode and the positive electrode, and provides a movement path of lithium ions, and any separator may be used, without particular limitation, as long as it is generally used in a lithium secondary battery as a separator. In particular, as the separator, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a general porous non-woven fabric, for example, a non-woven fabric made of glass fiber with high meting point, polyethylene terephthalate fiber, etc. may also be used. Furthermore, a coated separator including a ceramic component or a polymer material may also be used in order to secure heat resistance or mechanical strength.

In addition, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a lithium secondary battery, and the type is not particularly limited thereto.

In particular, the electrolyte may include an organic solvent and a lithium salt.

Any organic solvent may be used as the organic solvent without particular limitation as long as it may function as a medium through which ions involved in an electrochemical reaction of the battery may move. In particular, as the organic solvent, an ester-based solvent including methyl acetate, ethyl acetate, $\gamma$-butyrolactone, $\varepsilon$-caprolactone, etc.; an ether-based solvent including dibutyl ether, tetrahydrofuran, etc.; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), ethylmethylcarbonate (EMC), ethylene carbonate (EC), propylene carbonate (PC), etc.; an alcohol-based solvent including ethyl alcohol, isopropyl alcohol, etc.; nitriles including R-CN (where R is a linear, branched, or cyclic C2 to C20 hydrocarbon group, and may include a double-bond aromatic ring or an ether bond), etc.; amides including dimethylformamide, etc.; dioxolanes including 1,3-dioxolane, etc.; or sulfolanes may be used. Among these, a carbonate-based solvent is preferred, and a mixture of a cyclic carbonate (for example, ethylene carbonate, propylene carbonate, or the like) having high ionic conductivity and high dielectric constant capable of increasing charging and discharging performance of a battery, and a low-viscosity linear carbonate-based compound (for example, ethylmethyl carbonate, dimethyl carbonate, diethyl carbonate, or the like) is more preferred.

Any compound capable of providing lithium ions that are used in a lithium secondary battery may be used for the lithium salt without particular limitation. In particular, negative ions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, $LiB(C_2O_4)_2$, or the like may be used for the lithium salt. The lithium salt may be used in a concentration range of 0.1 to 2.0 M. When the concentration of lithium salt falls within the above range, the electrolyte may have appropriate conductivity and viscosity, and therefore, excellent performance of the electrolyte may be exhibited, and lithium ions may move effectively.

In order to improve lifetime characteristics of the battery, suppress the reduction in battery capacity, and improve discharge capacity of the battery, at least one additive, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, or the like may also be further included in the electrolyte in addition to the electrolyte components. At this time, the additive may be included in the amount of 0.1 to 10 wt% on the basis of the total weight of the electrolyte.

An outer shape of the lithium secondary battery of the present invention is not particularly limited, but a cylindrical type using a can, a prismatic type, a pouch type, a coin type, or the like may be used.

The lithium secondary battery according to the present invention may not only be used in a battery cell that is used as a power source of a small device, but may also be preferably used as a unit battery in a medium and large-sized battery module including a plurality of battery cells.

Examples of the medium and large-sized device may include an electric vehicle, a hybrid electric vehicle, a plug-in hybrid electric vehicle, a system for power storage, and the like, but not limited thereto.

Hereinafter, the present invention is described in more detail through particular examples. However, the following examples are only intended to aid understanding of the present invention, and the scope of the present invention is not limited thereto. It is obvious to those skilled in the art that various changes and modifications are possible within the scope and technical spirit of the present description, and it is natural that such changes and modifications fall within the scope of the appended claims.

## Examples

### Example 1

A positive electrode active material ($LiNi_{0.958}Co_{0.015}Mn_{0.027}O_2$) having a $D_{50}$ of 10.8 $\mu$m, carbon nanotube, and a PVDF binder were mixed in an N-methylpyrrolidone in a weight ratio of 95.6: 1.8: 2.6 to prepare a positive electrode slurry. The positive electrode slurry was applied to both sides of an aluminum current collector sheet, then dried at 120 °C, and then pressed to prepare a positive electrode.

A negative electrode active material (a mixture of natural graphite: artificial graphite: SiO in a weight ratio of 47.75: 47.75: 4.5), super C, a styrene-butadiene rubber (SBR), carboxymethyl cellulose (CMC) were mixed in water in a weight ratio of 95.95: 1.05: 1.70: 1.30 to prepare a negative electrode slurry. The negative electrode slurry was applied to both sides of a copper current collector sheet, then dried at 150 °C, and then pressed to prepare a negative electrode.

$LiPF_6$ was dissolved in an organic solvent (ethylene carbonate (EC): ethylmethyl carbonate (EMC): dimethyl carbonate (DMC) in a volume ratio of 20:5:75) to 1.3 M to prepare an electrolyte.

A separator was introduced between the positive electrode and the negative electrode, prepared as described above, to be laminated in the order of separator/positive electrode/separator/negative electrode, and then the laminate was wound to prepare an electrode assembly in a jelly-roll-type. The electrode assembly prepared as described above was inserted in a cylindrical battery can. The electrolyte was injected to the battery can to prepare a 4680 cell, and the cell was activated to prepare a lithium secondary battery.

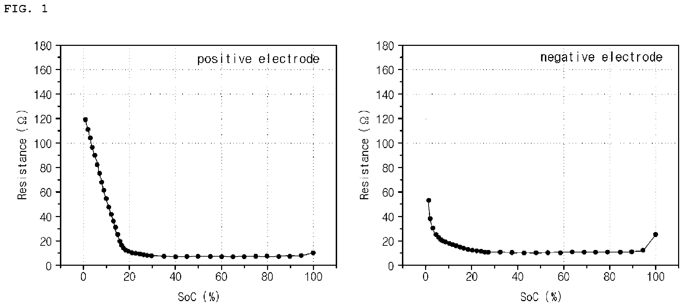

After the activation was terminated, the positive electrode and the negative electrode were separated from the lithium secondary battery. The separated positive electrode and a lithium metal counter electrode were used to prepare a first coin cell, and the separated negative electrode and a lithium metal counter electrode were used to prepare a second coin cell. The resistance was measured while the prepared first coin cell and second coin cell were discharged with 1 C at 24 °C, and the results were shown in FIG. 1.

In the graph of FIG. 1, the average resistance value X1 ($\Omega$) of the first coin cell in the SOC 20 to 100% region and the average resistance value Y1 ($\Omega$) of the second coin cell in the SOC 20 to 100% region were calculated and listed in Table 1 below.

In the graph of FIG. 1, the average resistance value X2 ($\Omega$) of the first coin cell in the SOC 0 to 20% region and the average resistance value Y2 ($\Omega$) of the second coin cell in the SOC 0 to 20% region were calculated and listed in Table 1 below.

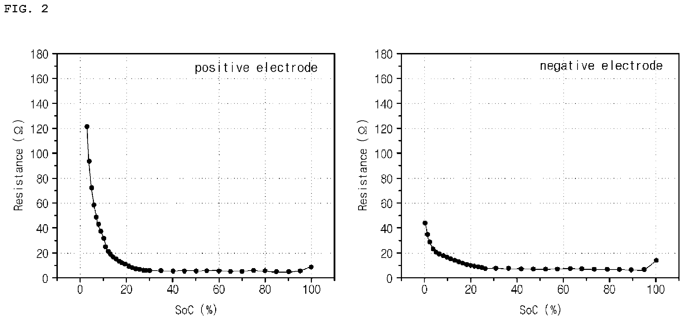

In addition, the resistance was measured while the prepared first coin cell and second coin cell were discharged with 1 C at 40 °C, and the results were shown in FIG. 2.

In the graph of FIG. 2, the average resistance value X3 ($\Omega$) of the first coin cell in the SOC 20 to 100% region and the average resistance value Y3 ($\Omega$) of the second coin cell in the SOC 20 to 100% region were calculated and listed in Table 1 below.

In the graph of FIG. 2, the average resistance value X4 ($\Omega$) of the first coin cell in the SOC 0 to 20% region and the average resistance value Y4 ($\Omega$) of the second coin cell in the SOC 0 to 20% region were calculated and listed in Table 1 below.

### Example 2

A positive electrode active material $LiNi_{0.891}Co_{0.066}Mn_{0.043}O_2$ having a $D_{50}$ of 8.5 $\mu$m, carbon nanotube, and a PVDF binder were mixed in an N-methylpyrrolidone in a weight ratio of 95.95: 1.50: 2.55 to prepare a positive electrode slurry. The positive electrode slurry was applied to both sides of an aluminum current collector sheet, then dried at 120 °C, and then pressed to prepare a positive electrode.

A negative electrode active material (natural graphite), super C, a styrene-butadiene rubber (SBR), carboxymethyl cellulose (CMC) were mixed in water in a weight ratio of 95.7: 1.4: 1.5: 1.4 to prepare a negative electrode slurry. The negative electrode slurry was applied to both sides of a copper current collector sheet, then dried at 150 °C, and then pressed to prepare a negative electrode.

LiPF$_6$ was dissolved in an organic solvent (ethylene carbonate (EC): ethylmethyl carbonate (EMC): dimethyl carbonate (DMC) in a volume ratio of 20:5:75) to 1.3 M to prepare an electrolyte.

A separator was introduced between the positive electrode and the negative electrode, prepared as described above, to be laminated in the order of separator/positive electrode/separator/negative electrode, and then the laminate was wound to prepare an electrode assembly in a jelly-roll-type. The electrode assembly prepared as described above was inserted in a cylindrical battery can. The electrolyte was injected to the battery can to prepare a 4680 cell, and the cell was activated to prepare a lithium secondary battery.

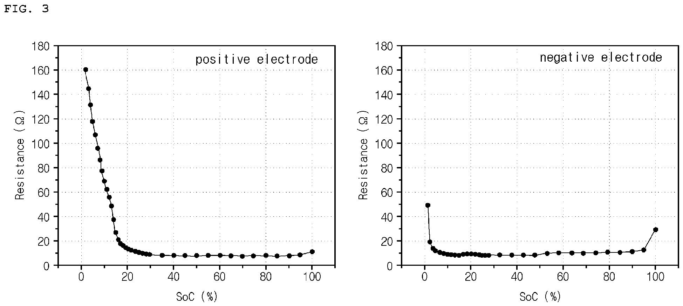

After the activation was terminated, the positive electrode and the negative electrode were separated from the lithium secondary battery. The separated positive electrode and a lithium metal counter electrode were used to prepare a first coin cell, and the separated negative electrode and a lithium metal counter electrode were used to prepare a second coin cell. The resistance was measured while the prepared first coin cell and second coin cell were discharged with 1 C at 24 °C, and the results were shown in FIG. 3.

In the graph of FIG. 3, the average resistance value X1 ($\Omega$) of the first coin cell in the SOC 20 to 100% region and the average resistance value Y1 ($\Omega$) of the second coin cell in the SOC 20 to 100% region were calculated and listed in Table 1 below.

In the graph of FIG. 3, the average resistance value X2 ($\Omega$) of the first coin cell in the SOC 0 to 20% region and the average resistance value Y2 ($\Omega$) of the second coin cell in the SOC 0 to 20% region were calculated and listed in Table 1 below.

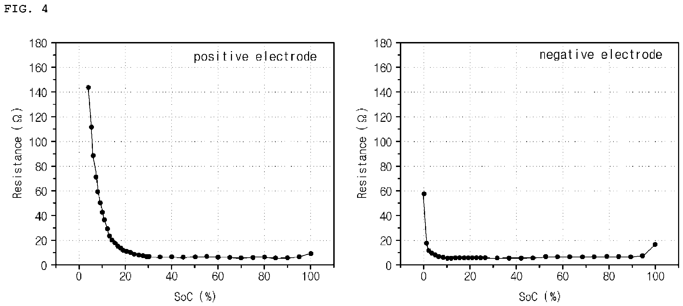

In addition, the resistance was measured while the prepared first coin cell and second coin cell were discharged with 1 C at 40 °C, and the results were shown in FIG. 4.

In the graph of FIG. 4, the average resistance value X3 ($\Omega$) of the first coin cell in the SOC 20 to 100% region and the average resistance value Y3 ($\Omega$) of the second coin cell in the SOC 20 to 100% region were calculated and listed in Table 1 below.

In the graph of FIG. 4, the average resistance value X4 ($\Omega$) of the first coin cell in the SOC 0 to 20% region and the average resistance value Y4 ($\Omega$) of the second coin cell in the SOC 0 to 20% region were calculated and listed in Table 1 below.

## Example 3

A positive electrode active material (LiNi$_{0.962}$Co$_{0.029}$Mn$_{0.009}$O$_2$) having a D$_{50}$ of 11.2 $\mu$m, carbon nanotube, and a PVDF binder were mixed in an N-methylpyrrolidone in a weight ratio of 95.69: 1.30: 3.01 to prepare a positive electrode slurry. The positive electrode slurry was applied to both sides of an aluminum current collector sheet, then dried at 120 °C, and then pressed to prepare a positive electrode.

A negative electrode active material (a mixture of natural graphite: artificial graphite: SiO in a weight ratio of 46.75: 46.75: 6.5), super C, a styrene-butadiene rubber (SBR), carboxymethyl cellulose (CMC) were mixed in water in a weight ratio of 95.625: 1.075: 1.900: 1.400 to prepare a negative electrode slurry. The negative electrode slurry was applied to both sides of a copper current collector sheet, then dried at 150 °C, and then pressed to prepare a negative electrode.

LiPF$_6$ was dissolved in an organic solvent (ethylene carbonate (EC): ethylmethyl carbonate (EMC) : dimethyl carbonate (DMC) in a volume ratio of 20:5:75) to 1.3 M to prepare an electrolyte.

A separator was introduced between the positive electrode and the negative electrode, prepared as described above, to be laminated in the order of separator/positive electrode/separator/negative electrode, and then the laminate was wound to prepare an electrode assembly in a jelly-roll-type. The electrode assembly prepared as described above was inserted in a cylindrical battery can. The electrolyte was injected to the battery can to prepare a 4680 cell, and the cell was activated to prepare a lithium secondary battery.

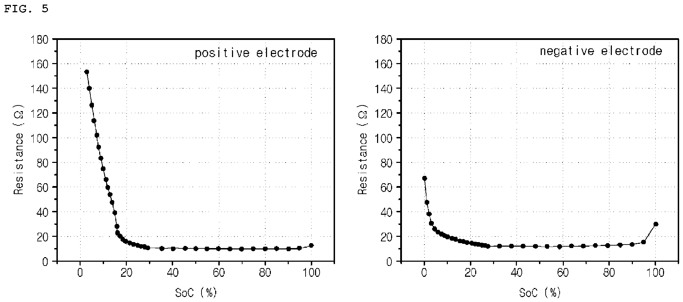

After the activation was terminated, the positive electrode and the negative electrode were separated from the lithium secondary battery. The separated positive electrode and a lithium metal counter electrode were used to prepare a first coin cell, and the separated negative electrode and a lithium metal counter electrode were used to prepare a second coin cell. The resistance was measured while the prepared first coin cell and second coin cell were discharged with 1 C at 24 °C, and the results were shown in FIG. 5.

In the graph of FIG. 5, the average resistance value X1 ($\Omega$) of the first coin cell in the SOC 20 to 100% region and the average resistance value Y1 ($\Omega$) of the second coin cell in the SOC 20 to 100% region were calculated and listed in Table 1 below.

In the graph of FIG. 5, the average resistance value X2 ($\Omega$) of the first coin cell in the SOC 0 to 20% region and the average resistance value Y2 ($\Omega$) of the second coin cell in the SOC 0 to 20% region were calculated and listed in Table 1 below.

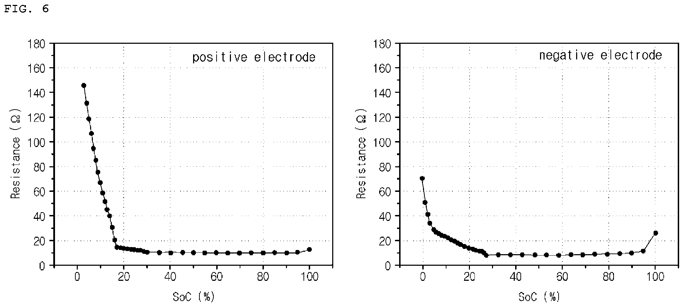

In addition, the resistance was measured while the prepared first coin cell and second coin cell were discharged with 1 C at 40 °C, and the results were shown in FIG. 6.

In the graph of FIG. 6, the average resistance value X3 ($\Omega$) of the first coin cell in the SOC 20 to 100% region and the average resistance value Y3 ($\Omega$) of the second coin cell in the SOC 20 to 100% region were calculated and listed in Table 1 below.

In the graph of FIG. 6, the average resistance value X4 ($\Omega$) of the first coin cell in the SOC 0 to 20% region and the average resistance value Y4 ($\Omega$) of the second coin cell in the SOC 0 to 20% region were calculated and listed in Table 1 below.

**Comparative Example 1**

A positive electrode active material ($LiNi_{0.962}Co_{0.029}Mn_{0.009}O_2$) having a $D_{50}$ of 3.8 $\mu$m, carbon nanotube, and a PVDF binder were mixed in an N-methylpyrrolidone in a weight ratio of 95.19: 1.80: 3.01 to prepare a positive electrode slurry. The positive electrode slurry was applied to both sides of an aluminum current collector sheet, then dried at 120 °C, and then pressed to prepare a positive electrode.

A negative electrode active material (a mixture of natural graphite: artificial graphite: SiO in a weight ratio of 46.75: 46.75: 6.5), super C, a styrene-butadiene rubber (SBR), carboxymethyl cellulose (CMC) were mixed in water in a weight ratio of 95.625: 1.0750: 1.900: 1.400 to prepare a negative electrode slurry. The negative electrode slurry was applied to both sides of a copper current collector sheet, then dried at 150 °C, and then pressed to prepare a negative electrode.

$LiPF_6$ was dissolved in an organic solvent (ethylene carbonate (EC): ethylmethyl carbonate (EMC): dimethyl carbonate (DMC) in a volume ratio of 20:5:75) to 1.3 M to prepare an electrolyte.

A separator was introduced between the positive electrode and the negative electrode, prepared as described above, to be laminated in the order of separator/positive electrode/separator/negative electrode, and then the laminate was wound to prepare an electrode assembly in a jelly-roll-type. The electrode assembly prepared as described above was inserted in a cylindrical battery can. The electrolyte was injected to the battery can to prepare a 4680 cell, and the cell was activated to prepare a lithium secondary battery.

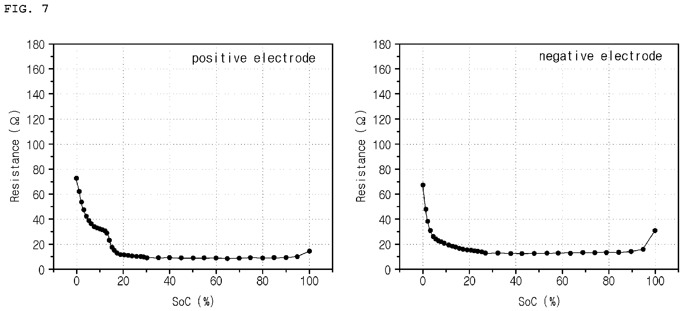

After the activation was terminated, the positive electrode and the negative electrode were separated from the lithium secondary battery. The separated positive electrode and a lithium metal counter electrode were used to prepare a first coin cell, and the separated negative electrode and a lithium metal counter electrode were used to prepare a second coin cell. The resistance was measured while the prepared first coin cell and second coin cell were discharged with 1 C at 24 °C, and the results were shown in FIG. 7.

In the graph of FIG. 7, the average resistance value X1 ($\Omega$) of the first coin cell in the SOC 20 to 100% region and the average resistance value Y1 ($\Omega$) of the second coin cell in the SOC 20 to 100% region were calculated and listed in Table 1 below.

In the graph of FIG. 7, the average resistance value X2 ($\Omega$) of the first coin cell in the SOC 0 to 20% region and the average resistance value Y2 ($\Omega$) of the second coin cell in the SOC 0 to 20% region were calculated and listed in Table 1 below.

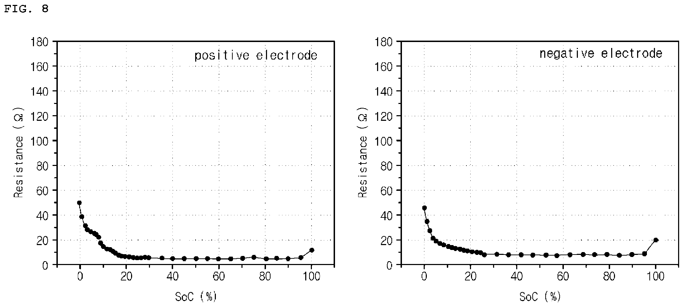

In addition, the resistance was measured while the prepared first coin cell and second coin cell were discharged with 1 C at 40 °C, and the results were shown in FIG. 8.

In the graph of FIG. 8, the average resistance value X3 ($\Omega$) of the first coin cell in the SOC 20 to 100% region and the average resistance value Y3 ($\Omega$) of the second coin cell in the SOC 20 to 100% region were calculated and listed in Table 1 below.

In the graph of FIG. 8, the average resistance value X4 ($\Omega$) of the first coin cell in the SOC 0 to 20% region and the average resistance value Y4 ($\Omega$) of the second coin cell in the SOC 0 to 20% region were calculated and listed in Table 1 below.

**Comparative Example 2**

A positive electrode active material ($LiNi_{0.962}Co_{0.029}Mn_{0.009}O_2$) having a $D_{50}$ of 3.8 $\mu$m, carbon nanotube, and a PVDF binder were mixed in an N-methylpyrrolidone in a weight ratio of 95.19: 1.80: 3.01 to prepare a positive electrode slurry. The positive electrode slurry was applied to both sides of an aluminum current collector sheet, then dried at 120 °C, and then pressed to prepare a positive electrode.

A negative electrode active material (a mixture of natural graphite: artificial graphite: SiO in a weight ratio of 44.75: 44.75: 10.5), super C, a styrene-butadiene rubber (SBR), carboxymethyl cellulose (CMC) were mixed in water in a weight ratio of 95.625: 1.075: 1.900: 1.400 to prepare a negative electrode slurry. The negative electrode slurry was applied to both sides of a copper current collector sheet, then dried at 150 °C, and then pressed to prepare a negative electrode.

$LiPF_6$ was dissolved in an organic solvent (ethylene carbonate (EC): ethylmethyl carbonate (EMC): dimethyl carbonate (DMC) in a volume ratio of 20:5:75) to 1.3 M to prepare an electrolyte.

A separator was introduced between the positive electrode and the negative electrode, prepared as described above, to be laminated in the order of separator/positive electrode/separator/negative electrode, and then the laminate was wound to prepare an electrode assembly in a jelly-roll-type. The electrode assembly prepared as described above was inserted in a cylindrical battery can. The electrolyte was injected to the battery can to prepare a 4680 cell, and the cell was activated to prepare a lithium secondary battery.

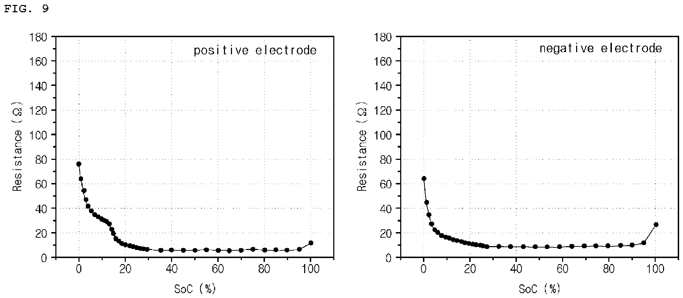

After the activation was terminated, the positive electrode and the negative electrode were separated from the lithium secondary battery. The separated positive electrode and a lithium metal counter electrode were used to prepare a first coin cell, and the separated negative electrode and a lithium metal counter electrode were used to prepare a second coin cell. The resistance was measured while the prepared first coin cell and second coin cell were discharged with 1 C at 24 °C, and the results were shown in FIG. 9.

In the graph of FIG. 9, the average resistance value X1 ($\Omega$) of the first coin cell in the SOC 20 to 100% region and the average resistance value Y1 ($\Omega$) of the second coin cell in the SOC 20 to 100% region were calculated and listed in Table 1 below.

In the graph of FIG. 9, the average resistance value X2 ($\Omega$) of the first coin cell in the SOC 0 to 20% region and the average resistance value Y2 ($\Omega$) of the second coin cell in the SOC 0 to 20% region were calculated and listed in Table 1 below.

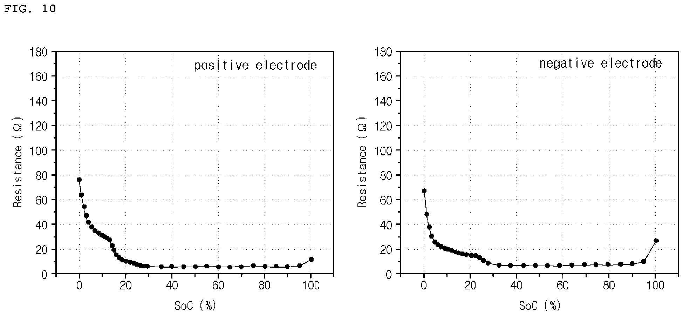

In addition, the resistance was measured while the prepared first coin cell and second coin cell were discharged with 1 C at 40 °C, and the results were shown in FIG. 10.

In the graph of FIG. 10, the average resistance value X3 ($\Omega$) of the first coin cell in the SOC 20 to 100% region and the average resistance value Y3 ($\Omega$) of the second coin cell in the SOC 20 to 100% region were calculated and listed in Table 1 below.

In the graph of FIG. 10, the average resistance value X4 ($\Omega$) of the first coin cell in the SOC 0 to 20% region and the average resistance value Y4 ($\Omega$) of the second coin cell in the SOC 0 to 20% region were calculated and listed in Table 1 below.

**Comparative Example 3**

A positive electrode active material ($LiNi_{0.962}Co_{0.029}Mn_{0.009}O_2$) having a $D_{50}$ of 11.2 $\mu$m, carbon nanotube, and a PVDF binder were mixed in an N-methylpyrrolidone in a weight ratio of 95.6: 1.8: 2.6 to prepare a positive electrode slurry. The positive electrode slurry was applied to both sides of an aluminum current collector sheet, then dried at 120 °C, and then pressed to prepare a positive electrode.

A negative electrode active material (a mixture of natural graphite: artificial graphite: SiO in a weight ratio of 44.75: 44.75: 10.5), super C, a styrene-butadiene rubber (SBR), carboxymethyl cellulose (CMC) were mixed in water in a weight ratio of 95.625: 1.075: 1.900: 1.400 to prepare a negative electrode slurry. The negative electrode slurry was applied to both sides of a copper current collector sheet, then dried at 150 °C, and then pressed to prepare a negative electrode.

$LiPF_6$ was dissolved in an organic solvent (ethylene carbonate (EC): ethylmethyl carbonate (EMC): dimethyl carbonate (DMC) in a volume ratio of 20:5:75) to 1.3 M to prepare an electrolyte.

A separator was introduced between the positive electrode and the negative electrode, prepared as described above, to be laminated in the order of separator/positive electrode/separator/negative electrode, and then the laminate was wound to prepare an electrode assembly in a jelly-roll-type. The electrode assembly prepared as described above was inserted in a cylindrical battery can. The electrolyte was injected to the battery can to prepare a 4680 cell, and the cell was activated to prepare a lithium secondary battery.

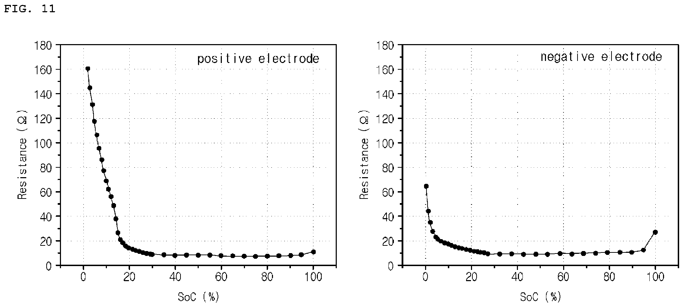

After the activation was terminated, the positive electrode and the negative electrode were separated from the lithium secondary battery. The separated positive electrode and a lithium metal counter electrode were used to prepare a first coin cell, and the separated negative electrode and a lithium metal counter electrode were used to prepare a second coin cell. The resistance was measured while the prepared first coin cell and second coin cell were discharged with 1 C at 24 °C, and the results were shown in FIG. 11.

In the graph of FIG. 11, the average resistance value X1 ($\Omega$) of the first coin cell in the SOC 20 to 100% region and the average resistance value Y1 ($\Omega$) of the second coin cell in the SOC 20 to 100% region were calculated and listed in Table 1 below.

In the graph of FIG. 11, the average resistance value X2 ($\Omega$) of the first coin cell in the SOC 0 to 20% region and the average resistance value Y2 ($\Omega$) of the second coin cell in the SOC 0 to 20% region were calculated and listed in Table 1 below.

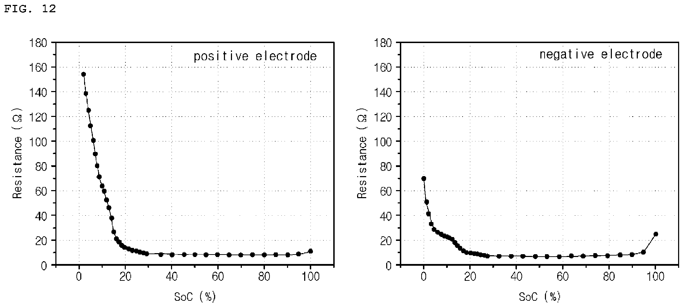

In addition, the resistance was measured while the prepared first coin cell and second coin cell were discharged with 1 C at 40 °C, and the results were shown in FIG. 12.

In the graph of FIG. 12, the average resistance value X3 ($\Omega$) of the first coin cell in the SOC 20 to 100% region and the average resistance value Y3 ($\Omega$) of the second coin cell in the SOC 20 to 100% region were calculated and listed in Table 1 below.

In the graph of FIG. 12, the average resistance value X4 ($\Omega$) of the first coin cell in the SOC 0 to 20% region and the average resistance value Y4 ($\Omega$) of the second coin cell in the SOC 0 to 20% region were calculated and listed in Table 1 below.

**Comparative Example 4**

A positive electrode active material ($LiNi_{0.962}Co_{0.029}Mn_{0.009}O_2$) having a $D_{50}$ of 4.5 $\mu$m, carbon nanotube, and a PVDF binder were mixed in an N-methylpyrrolidone in a weight ratio of 95.69: 1.30: 3.01 to prepare a positive electrode slurry. The positive electrode slurry was applied to both sides of an aluminum current collector sheet, then dried at 120 °C, and then pressed to prepare a positive electrode.

A negative electrode active material (a mixture of natural graphite: SiO in a weight ratio of 93.5: 6.5), super C, a styrene-butadiene rubber (SBR), carboxymethyl cellulose (CMC) were mixed in water in a weight ratio of 95.625: 1.075: 1.900: 1.400 to prepare a negative electrode slurry. The negative electrode slurry was applied to both sides of a copper current collector sheet, then dried at 150 °C, and then pressed to prepare a negative electrode.

$LiPF_6$ was dissolved in an organic solvent (ethylene carbonate (EC): ethylmethyl carbonate (EMC): dimethyl carbonate (DMC) in a volume ratio of 20:5:75) to 1.3 M to prepare an electrolyte.

A separator was introduced between the positive electrode and the negative electrode, prepared as described above, to be laminated in the order of separator/positive electrode/separator/negative electrode, and then the laminate was wound to prepare an electrode assembly in a jelly-roll-type. The electrode assembly prepared as described above was inserted in a cylindrical battery can. The electrolyte was injected to the battery can to prepare a 4680 cell, and the cell was activated to prepare a lithium secondary battery.

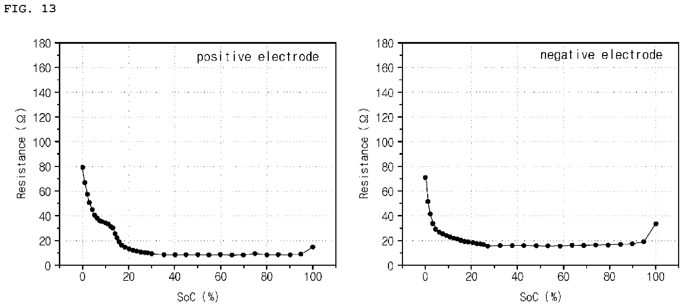

After the activation was terminated, the positive electrode and the negative electrode were separated from the lithium secondary battery. The separated positive electrode and a lithium metal counter electrode were used to prepare a first coin cell, and the separated negative electrode and a lithium metal counter electrode were used to prepare a second coin cell. The resistance was measured while the prepared first coin cell and second coin cell were discharged with 1 C at 24 °C, and the results were shown in FIG. 13.

In the graph of FIG. 13, the average resistance value X1 ($\Omega$) of the first coin cell in the SOC 20 to 100% region and the average resistance value Y1 ($\Omega$) of the second coin cell in the SOC 20 to 100% region were calculated and listed in Table 1 below.

In the graph of FIG. 13, the average resistance value X2 ($\Omega$) of the first coin cell in the SOC 0 to 20% region and the average resistance value Y2 ($\Omega$) of the second coin cell in the SOC 0 to 20% region were calculated and listed in Table 1 below.

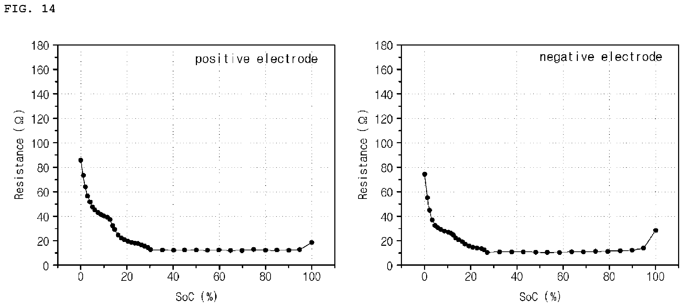

In addition, the resistance was measured while the prepared first coin cell and second coin cell were discharged with 1 C at 40 °C, and the results were shown in FIG. 14.

In the graph of FIG. 14, the average resistance value X3 ($\Omega$) of the first coin cell in the SOC 20 to 100% region and the average resistance value Y3 ($\Omega$) of the second coin cell in the SOC 20 to 100% region were calculated and listed in Table 1 below.

In the graph of FIG. 14, the average resistance value X4 ($\Omega$) of the first coin cell in the SOC 0 to 20% region and the average resistance value Y4 ($\Omega$) of the second coin cell in the SOC 0 to 20% region were calculated and listed in Table 1 below.

[Table 1]

| | X1 | Y1 | X2 | Y2 | X3 | Y3 | X4 | Y4 |
|---|---|---|---|---|---|---|---|---|
| Example 1 | 7.4 | 9.5 | 89.4 | 21.7 | 5.6 | 7.4 | 63.3 | 24.6 |
| Example 2 | 8.3 | 9.3 | 100.9 | 15.5 | 6.1 | 6.2 | 80.8 | 14.1 |
| Example 3 | 10.4 | 12.6 | 93.1 | 26.1 | 9.2 | 8.1 | 67.1 | 24.2 |
| Comparative Example 1 | 7.4 | 12.4 | 38.4 | 24.2 | 5.9 | 7.7 | 31.6 | 23.0 |
| Comparative Example 2 | 7.4 | 7.9 | 38.4 | 18.8 | 5.9 | 7.1 | 31.6 | 21.4 |
| Comparative Example 3 | 8.3 | 7.1 | 89.4 | 20.0 | 7.1 | 6.5 | 63.3 | 22.4 |
| Comparative Example 4 | 11.8 | 12.9 | 46.1 | 28.2 | 12.8 | 11.1 | 40.1 | 27.0 |

**Experimental Example 1-Evaluation on Lifetime Characteristics at Room Temperature**

Lifetime characteristics at room temperature of the 4680 cells according to Examples 1 to 3 and Comparative Examples 1 to 4 were evaluated.

In particular, 70 cycles of charging and discharging were performed on each of the 4680 cells, according to Examples 1 to 3 and Comparative Examples 1 to 4, where 1 cycle refers to performing charging with 0.5 C constant current to 4.2 V and discharging with 0.5 C constant current to 2.5 V at 24 °C, and then the capacity retention rate compared to an initial capacity after 70 cycles was measured. The results were listed in Table 2 below.

[Table 2]

|  | Capacity Retention Rate (%) |
| --- | --- |
| Example 1 | 97.4 |
| Example 2 | 95.4 |
| Example 3 | 92.4 |
| Comparative Example 1 | 90.3 |
| Comparative Example 2 | 86.4 |
| Comparative Example 3 | 87.2 |
| Comparative Example 4 | 77.4 |

As listed in Table 2 above, it can be seen that the lithium secondary batteries satisfying Expression (1) and Expression (2), according to Examples 1 to 3, have more excellent lifetime characteristics at room temperature than the lithium secondary batteries not satisfying any one or more of Expression (1) and Expression (2), according to Comparative Examples 1 to 4.

**Experimental Example 2-Evaluation on Lifetime Characteristics at High Temperature**

Lifetime characteristics at high temperature of the 4680 cells according to Examples 1 to 3 and Comparative Examples 1 to 4 were evaluated.

In particular, 70 cycles of charging and discharging were performed on each of the 4680 cells, according to Examples 1 to 3 and Comparative Examples 1 to 4, where 1 cycle refers to performing charging with 0.5 C constant current to 4.2 V and discharging with 0.5 C constant current to 2.5 V at 40 °C, and then the capacity retention rate compared to an initial capacity after 70 cycles was measured. The results were listed in Table 3 below.

[Table 3]

|  | Capacity retention rate (%) |
| --- | --- |
| Example 1 | 96.5 |
| Example 2 | 95.7 |
| Example 3 | 94.1 |
| Comparative Example 1 | 93.7 |
| Comparative Example 2 | 92.9 |
| Comparative Example 3 | 93.9 |
| Comparative Example 4 | 86.2 |

As listed in Table 3 above, it can be seen that the lithium secondary batteries satisfying Expression (1) and Expression (2), according to Examples 1 to 3, have more excellent lifetime characteristics at high temperature than the lithium secondary batteries not satisfying any one or more of Expression (1) and Expression (2) according to Comparative Examples 1 to 4.

**Claims**

1. A lithium secondary battery comprising:

a positive electrode; a negative electrode; and an electrolyte,
wherein an average resistance X1 of the positive electrode at room temperature and SOC 20 to 100% and an average resistance Y1 of the negative electrode at room temperature and SOC 20 to 100% satisfy Expression (1) below, and an average resistance X2 of the positive electrode at room temperature and SOC 0 to 20% and an average resistance Y2 of the negative electrode at room temperature and SOC 0 to 20% satisfy Expression (2) below.

$$\text{Expression (1):} \quad 0.6 \times Y1 \leq X1 \leq 0.9 \times Y1$$

$$\text{Expression (2):} \quad 2 \times Y2 \leq X2$$

2. The lithium secondary battery of claim 1, wherein an average resistance X3 of the positive electrode at 40 °C and SOC 20 to 100% and an average resistance Y3 of the negative electrode at 40 °C and SOC 20 to 100% further satisfy Expression (3) below.

$$\text{Expression (3):} \quad 0.75 \times Y3 \leq X3 \leq Y3$$

3. The lithium secondary battery of claim 1, wherein an average resistance X4 of the positive electrode at 40 °C and SOC 0 to 20% and an average resistance Y4 of the negative electrode at 40 °C and SOC 0 to 20% further satisfy Expression (4) below.

$$\text{Expression (4):} \quad 1.5 \times Y4 \leq X4$$

4. The lithium secondary battery of claim 1, wherein the positive electrode comprises a positive electrode active material layer and a positive electrode current collector,

the positive electrode active material layer comprises a positive electrode active material, a conductive material, and a binder, and
the positive electrode active material is a lithium nickel-based transition metal oxide including a nickel content of 85 atm% or greater in transition metal other than lithium.

5. The lithium secondary battery of claim 4, wherein the positive electrode active material is a single particle or a similar-single particle.

6. The lithium secondary battery of claim 4, wherein the conductive material is included in an amount of 0.1 to 2.5 wt% on the basis of the entire positive electrode active material layer.

7. The lithium secondary battery of claim 4, wherein the positive electrode active material has a powder resistance of 100 to 500 Ω.

8. The lithium secondary battery of claim 1, wherein the negative electrode comprises a negative electrode active material layer and a negative electrode current collector,

the negative electrode active material layer comprises a negative electrode active material, a conductive material, and a binder, and
the negative electrode active material comprises a silicon-based negative electrode active material.

9. The lithium secondary battery of claim 8, wherein the silicon-based negative electrode active material is selected from the group consisting of SiO, SiC, and Si.

10. The lithium secondary battery of claim 8, wherein the silicon-based negative electrode active material is included in an amount of 3 wt% or greater on the basis of the entire negative electrode active material layer.

11. The lithium secondary battery of claim 8, wherein the conductive material is included in an amount of 0.05 to 2.50 wt% on the basis of the entire negative electrode active material layer.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

## INTERNATIONAL SEARCH REPORT

| International application No. |
|---|
| **PCT/KR2024/010057** |

### A. CLASSIFICATION OF SUBJECT MATTER

**H01M 10/052**(2010.01)i; **H01M 4/131**(2010.01)i; **H01M 4/134**(2010.01)i; **H01M 4/525**(2010.01)i; **H01M 4/38**(2006.01)i; **H01M 4/48**(2010.01)i; **H01M 4/62**(2006.01)i; **H01M 4/02**(2006.01)i; **H01M 10/42**(2006.01)i

According to International Patent Classification (IPC) or to both national classification and IPC

### B. FIELDS SEARCHED

Minimum documentation searched (classification system followed by classification symbols)

H01M 10/052(2010.01); G01R 31/382(2019.01); H01M 10/0525(2010.01); H01M 10/0567(2010.01); H01M 10/058(2010.01); H01M 10/0583(2010.01); H01M 4/134(2010.01); H01M 4/36(2006.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(cathode), 음극(anode), 충전상태(state of charge, SOC), 온도(temperature), 저항(resistance), 리튬이차전지(lithium secondary battery)

### C. DOCUMENTS CONSIDERED TO BE RELEVANT

| Category* | Citation of document, with indication, where appropriate, of the relevant passages | Relevant to claim No. |
|---|---|---|
| A | KR 10-2018-0050165 A (LG CHEM, LTD.) 14 May 2018 (2018-05-14)<br>See claim 1. | 1-11 |
| A | JP 2017-107796 A (DENSO CORP.) 15 June 2017 (2017-06-15)<br>See claim 1. | 1-11 |
| A | JP 2020-167054 A (MITSUI CHEMICALS INC.) 08 October 2020 (2020-10-08)<br>See claims 1 and 2. | 1-11 |
| A | KR 10-2022-0059383 A (SK ON CO., LTD.) 10 May 2022 (2022-05-10)<br>See claims 1, 2, 11 and 12. | 1-11 |
| A | KR 10-2023-0074011 A (LG ENERGY SOLUTION, LTD.) 26 May 2023 (2023-05-26)<br>See claims 1 and 5. | 1-11 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 October 2024** | **23 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2024/010057** |

| Patent document cited in search report | | | Publication date (day/month/year) | Patent family member(s) | | | Publication date (day/month/year) |
| --- | --- | --- | --- | --- | --- | --- | --- |
| KR | 10-2018-0050165 | A | 14 May 2018 | KR | 10-2126968 | B1 | 25 June 2020 |
| JP | 2017-107796 | A | 15 June 2017 | DE | 102016123765 | A1 | 29 June 2017 |
| | | | | JP | 2017-107795 | A | 15 June 2017 |
| | | | | JP | 6701510 | B2 | 27 May 2020 |
| | | | | JP | 6701511 | B2 | 27 May 2020 |
| | | | | US | 10276868 | B2 | 30 April 2019 |
| | | | | US | 2017-0170476 | A1 | 15 June 2017 |
| JP | 2020-167054 | A | 08 October 2020 | JP | 7276957 | B2 | 18 May 2023 |
| KR | 10-2022-0059383 | A | 10 May 2022 | | None | | |
| KR | 10-2023-0074011 | A | 26 May 2023 | CN | 116802833 | A | 22 September 2023 |
| | | | | EP | 4276938 | A1 | 15 November 2023 |
| | | | | JP | 2024-502482 | A | 19 January 2024 |
| | | | | US | 2024-0088378 | A1 | 14 March 2024 |
| | | | | WO | 2023-090944 | A1 | 25 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230091706